# EUROPÄISCHE PATENTSCHRIFT

(11) **EP 1 631 046 B1**
(45) Veröffentlichungstag und Bekanntmachung des Hinweises auf die Patenterteilung: **27.10.2010**
(21) Anmeldenummer: 05018234.4
(22) Anmeldetag: 23.08.2005
(51) Int. Cl.: H04M 1/247, G06F 3/033

(54) **Darstellung von Menüfeldern verschiedener Anwendungsprogramme auf einer Anzeige eines mobilen Endgerätes**
Displaying of menu fields of different applications on a screen of a mobile device
Affichage de champs de menus relatifs à différentes applications sur l'écran d'un dispositif portatif

(30) Priorität: 31.08.2004 DE 102004042140
(43) Veröffentlichungstag der Anmeldung: 01.03.2006
(73) Patentinhaber: Vodafone Holding GmbH, 40213 Düsseldorf (DE)
(72) Erfinder: Birkhölzer, Nancy, 40223 Düsseldorf (DE); Schliwa, Karin, 50677 Köln (DE)
(74) Vertreter: Weisbrodt, Bernd

(56) Entgegenhaltungen:
- WO-A-96/32800
- US-A- 5 572 648
- US-A- 6 078 314
- US-A1- 2001 015 721
- US-A1- 2003 013 483
- US-A1- 2004 141 011

## Beschreibung

Die vorliegende Erfindung betrifft ein Verfahren zum Betreiben von in Mobilfunknetzen betreibbaren mobilen Endgeräten, wobei seitens einer optischen Anzeigeeinrichtung eines mobilen Endgerätes mittels einer Eingabeeinrichtung des mobilen Endgerätes auswählbare Menüfelder zur Aktivierung von Anwendungsprogrammen und/oder auswählbare Menüfelder zur Aktivierung von Funktionalitäten von Anwendungsprogrammen wiedergegeben werden. Ferner betrifft die Erfindung ein mobiles Endgerät zur Nutzung in Mobilfunknetzen, welches zur Ausführung des erfindungsgemäßen Verfahrens ausgebildet ist.

Derartige Verfahren sind im Stand der Technik in zahlreichen Ausgestaltungen bekannt und beispielsweise in der EP 0 659 004 B1 oder der WO 97/32439 beschrieben. Dabei werden seitens der Anzeigeeinrichtung eines mobilen Endgerätes auswählbare Menüfelder lediglich eines Anwendungsprogramms wiedergegeben. Die Bedienbarkeit als auch die Funktionalitäten der Anwendungsprogramme im Zusammenhang mit den auswählbaren Menüfeldern sind damit bisher stark eingeschränkt, schwierig handhabbar und für den entsprechende Anwendungsprogramme nutzenden Mobilfunkteilnehmer, insbesondere mangels Individualisierbarkeit, in der Regel wenig attraktiv. Dies führt mitunter dazu, dass entsprechende Dienste von Mobilfunkteilnehmern nicht oder nur selten genutzt werden.

Aus der WO 96/32800 A1 ist ein Festnetztelefon bekannt, das eine optionsbasierte Aktivierung von mehreren Funktionen in nebeneinander angeordneten Spalten anbietet.

Die US 2001/0015721 A1 zeigt ein mobiles Endgerät bei dem in einem oberen Bereich einer Anzeigeinrichtung mehrere Hauptmenüicons horizontal nebeneinander angeordnet zur Auswahl angeboten werden. In einem sich unterhalb des oberen Bereichs der Anzeigeeinrichtung der Hauptmenüicons befindenden Bereich werden, für ein ausgewähltes Hauptmenüicon, Untermenüicons zur Auswahl angeboten.

Vor diesem Hintergrund liegt der Erfindung die **Aufgabe** zugrunde, ein Verfahren der eingangs genannten Art unter Meidung der beschriebenen Nachteile zu verbessern, derart, dass eine einfachere, Nutzung entsprechender Anwendungsprogramme ermöglicht wird.

Diese Aufgabe wird erfindungsgemäß gelöst durch die Merkmale des Anspruchs 1.

Der Erfindung liegt die Erkenntnis zugrunde, dass eine einfachere, attraktivere und intensivere Nutzung von Anwendungsprogrammen erzielbar ist, wenn den entsprechende mobile Endgeräte nutzenden Mobilfunkteilnehmern seitens der optischen Anzeigeeinrichtung mehrere Menüfelder von Anwendungsprogrammen bzw. von Funktionalitäten von Anwendungsprogrammen zur Aktivierungsauswahl angeboten werden.

Vorteilhafterweise ist wenigstens ein Anwendungsprogramm und/oder wenigstens eine Funktionalität eines Anwendungsprogramms wenigstens einen Nachrichtendienst eines Mobilfunknetzes nutzend ausgebildet. Dadurch ist eine Intensivierung der Nutzung von Nachrichtendiensten des Mobilfunknetzes und damit eine Auslastungserhöhung des Mobilfunknetzes erzielbar.

Eine vorteilhafte Ausgestaltung der Erfindung ist gekennzeichnet durch Anwendungsprogramme zur Wiedergabe und/oder Verarbeitung von Informationsinhalten, vorzugsweise von mittels eines Nachrichtendienstes eines Mobilfunknetzes auf mobile Endgeräte übertragbaren Informationsinhalten. Dies ermöglicht insbesondere die Nutzung von sogenannten "Push-Contents" als Informationsinhalte verwendenden Anwendungen bzw. Anwendungsfunktionen, die geeignet sind, die Nutzung von Nachrichtendiensten des Mobilfunknetzes durch die Mobilfunkteilnehmer und damit die Auslastung des Mobilfunknetzes weiter zu erhöhen.

In einer weiteren vorteilhaften Ausgestaltung der Erfindung werden seitens wenigstens eines Menüfeldes Informationsinhalte wenigstens teilweise wiedergegeben. Erfindungsgemäß sind so Informationsinhalte in den Menüfeldern selbst wiedergebbar, so dass der entsprechende Dienste nutzende Mobilfunkteilnehmer schon durch die Menüfelder teilweise informiert, was die Nutzung insgesamt einfacher und attraktiver macht. Vorteilhafterweise erfolgt die Wiedergabe von Teilen von Informationsinhalten derart, dass der Mobilfunkteilnehmer animiert wird, wenigstens den Rest, das heißt wenigstens den verbleibenden Teil der jeweiligen Informationsinhalte, oder die gesamten Informationsinhalte mit den Anwendungsprogrammen und/oder den Funktionalitäten der Anwendungsprogramme zu nutzen. Dadurch ist insbesondere neben einer weiteren Erhöhung der Nutzungsattraktivität die Nutzung von entsprechenden Nachrichtendiensten des Mobilfunknetzes, die zur Übertragung der Informationsinhalte auf das mobile Endgerät Verwendung finden, weiter steigerbar und das Mobilfunknetz entsprechend weiter auslastbar. Gemäß einem weiteren vorteilhaften Vorschlag der Erfindung wird bei Aktivierungsauswahl eines Menüfeldes zumindest der verbleibende Teil der Informationsinhalte seitens der Anzeigeeinrichtung wiedergegeben, vorzugsweise ohne die Wiedergabe der übrigen Menüfelder seitens der Anzeigeeinrichtung.

Vorteilhafterweise sind die Menüfelder graphisch ausgebildet, vorzugsweise in Form von Bildern und/oder Symbolen. Dadurch wird insbesondere die Nutzung und Bedienbarkeit für den Mobilfunkteilnehmer weiter vereinfacht. In einer bevorzugten Ausgestaltung der Erfindung werden zur weiteren Steigerung der Attraktivität der Nutzung für den Mobilfunkteilnehmer die Informationsinhalte durch graphisch animierte Menüfelder wiedergegeben.

In einer besonders vorteilhaften Ausgestaltung der Erfindung sind die Anwendungsprogramme und/oder Funktionalitäten von Anwendungsprogrammen, deren Menüfelder seitens der Anzeigeeinrichtung wiedergegeben werden, nutzerindividuell auswählbar. Gemäß einer weiteren vorteilhaften Ausgestaltung der Erfindung sind Art, Farbe, Größe und/oder Position der Menüfelder, die seitens der Anzeigeeinrichtung wiedergegeben werden, nutzerindividuell auswählbar und/oder vorgebbar.

Vorteilhafterweise sind die Menüfelder unter anwendungsorientierten Aspekten in Gruppen aufgeteilt und zu einer hierarchischen Menüstruktur gegliedert. Dadurch ist eine weiter vereinfachte Bedienung erzielbar.

Gemäß einem weiteren vorteilhaften Vorschlag der Erfindung werden die Menüfelder horizontal und/oder vertikal nebeneinander wiedergegeben. Vorteilhafterweise ist die Wiedergabeanordnung nutzerindividuell auswählbar und/oder vorgebbar.

Gemäß einer weiteren besonders vorteilhaften Ausgestaltung der Erfindung gibt wenigstens ein Menüfeld eine Verknüpfung zu einer Nachrichtenquelle zur Auswahl wieder und erfolgt bei Aktivierungsauswahl eine entsprechende Verknüpfung. Als Nachrichtenquelle im Sinne der vorliegenden Erfindung kommt dabei insbesondere eine Verknüpfung zu über Kommunikationsnetzwerke, insbesondere das Internet, erreichbare Datenbanken in Frage, welche von entsprechenden Nachrichtendiensten betrieben und insbesondere mit tagesaktuellen Nachrichten und/oder Informationen, beispielsweise Börsennotierungen oder dergleichen, versorgt werden.

Vorteilhafterweise ist der Nachrichtendienst des Mobilfunknetzes ein Rundspruchdienst, vorzugsweise ein nach Funkzellen individualisierbarer alphanumerischer Rundspruchdienst (Cellbroadcast) ist. So können in den jeweiligen Funkzellenbereichen lokal relevante Informationsinhalte an potentielle Interessenten übertragen bzw. diesen angeboten werden. Vorteilhafterweise ist der Nachrichtendienst des Mobilfunknetzes ein Kurzmitteilungsdienst (SMS) und/oder ein ist Multimedia-Mitteilungsdienst (MMS).

Eine weitere Ausgestaltung der Erfindung ist gekennzeichnet durch ein Anwendungsprogramm zur Erstellung, Verarbeitung und/oder Verwaltung von nutzerindividuellen Nachrichten, vorzugsweise umfassend Nachrichten von ein- und/oder ausgehenden Anrufen, Kurzmitteilungsdiensten (SMS) und/oder Multimedia-Mitteilungsdiensten (MMS).

Eine weitere Ausgestaltung der Erfindung ist gekennzeichnet durch ein Anwendungsprogramm zur Erstellung, Verarbeitung und/oder Verwaltung von nutzerindividuellen Terminen, wobei der Nutzer vorzugsweise wenigstens teilautomatisch an aktuell anstehende Termine erinnert wird und/oder vorzugsweise Terminänderungen und/oder -abhängigkeiten wenigstens teilautomatisch verarbeitet werden.

Eine weitere Ausgestaltung der Erfindung ist gekennzeichnet durch ein Anwendungsprogramm zur nutzerindividuellen Erstellung, Verarbeitung und/oder Verwaltung von Informationen über Kommunikationspartner.

Eine weitere Ausgestaltung der Erfindung ist gekennzeichnet durch ein Anwendungsprogramm zur nutzerindividuellen Erstellung, Verarbeitung und/oder Verwaltung von optischen und/oder akustischen Informationen, vorzugsweise Fotos und/oder Musik.

Gemäß einem weiteren Vorschlag der Erfindung ist das Anwendungsprogramm ein zur Unterhaltung des Nutzers dienendes Spiel, vorzugsweise ein über das Mobilfunknetz mit anderen Nutzern gemeinsam spielbares Spiel.

Das mobiles Endgerät zur Nutzung in Mobilfunknetzen, ist vorteilhafterweise zur Ausführung des erfindungsgemäßen Verfahrens ausgebildet. In einer zweckmäßigen Ausgestaltung der Erfindung ist das mobile Endgerät ein Mobilfunktelefon, vorzugsweise ein Multimedia-Mitteilungsdienst-fähiges (MMS-fähiges) Mobilfunktelefon mit integrierter digitaler Kamera.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: eine Anzeigeeinrichtung eines mobilen Endgerätes mit einem Ausführungsbeispiel für eine erfindungsgemäße Wiedergabe von aktivierungsauswählbaren Menüfeldern von Funktionalitäten von Anwendungsprogrammen;
- Fig. 2: eine Anzeigeeinrichtung eines mobilen Endgerätes mit einem weiteren Ausführungsbeispiel für eine erfindungsgemäße Wiedergabe von aktivierungsauswählbaren Menüfeldern von Funktionalitäten von Anwendungsprogrammen;
- Fig. 3: in einer schematischen Darstellung ein prinzipielles Ausführungsbeispiel für eine erfindungsgemäße Wiedergabe von aktivierungsauswählbaren Menüfeldern von Funktionalitäten von Anwendungsprogrammen entsprechend Fig. 1 und Fig. 2;
- Fig. 4: in einer schematischen Darstellung ein prinzipielles Ausführungsbeispiel für eine erfindungsgemäße Wiedergabe von aktivierungsauswählbaren Menüfeldern von Anwendungsprogrammen entsprechend Fig. 1 und Fig. 2, und
- Fig. 5: eine Anzeigeeinrichtung eines mobilen Endgerätes mit einem Ausführungsbeispiel für erfindungsgemäß auswählbare Anwendungsprogramme.

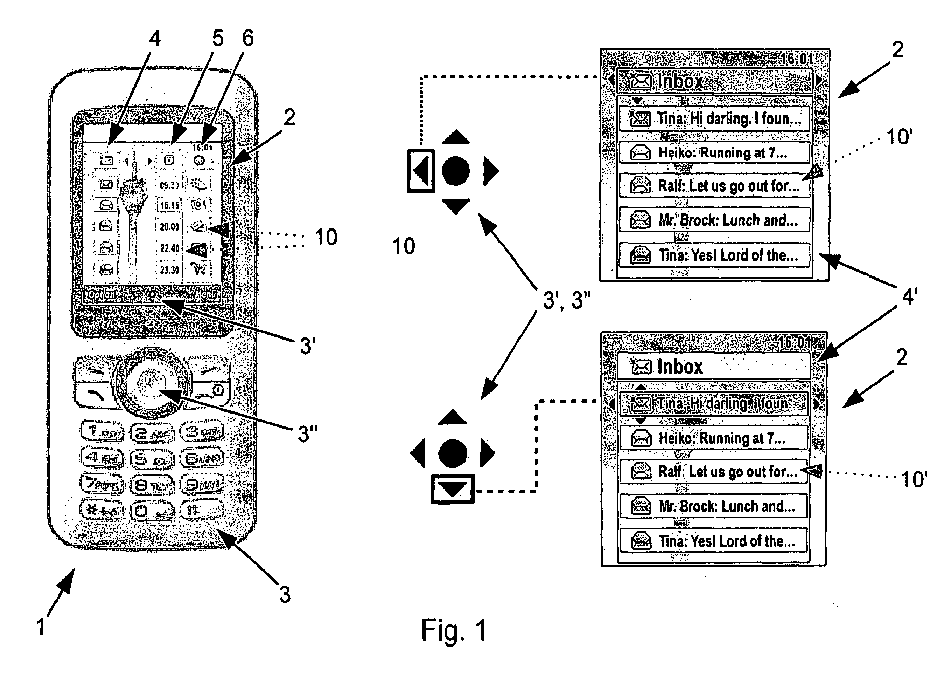

Die Figuren 1, 2 und 5 zeigen ein als mobiles Endgerät zur Nutzung in Mobilfunknetzen dienendes Mobilfunktelefon 1, mit einer optischen Anzeigeeinrichtung 2 und einer Eingabeeinrichtung 3, vorliegend einem mehrfarbigem Display 2 und einer mehrere Tasten aufweisenden Tastatur 3. In den Figuren 1 bis 5 ist das Display 2 des Mobilfunktelefons 1 ist im Detail vergrößert dargestellt.

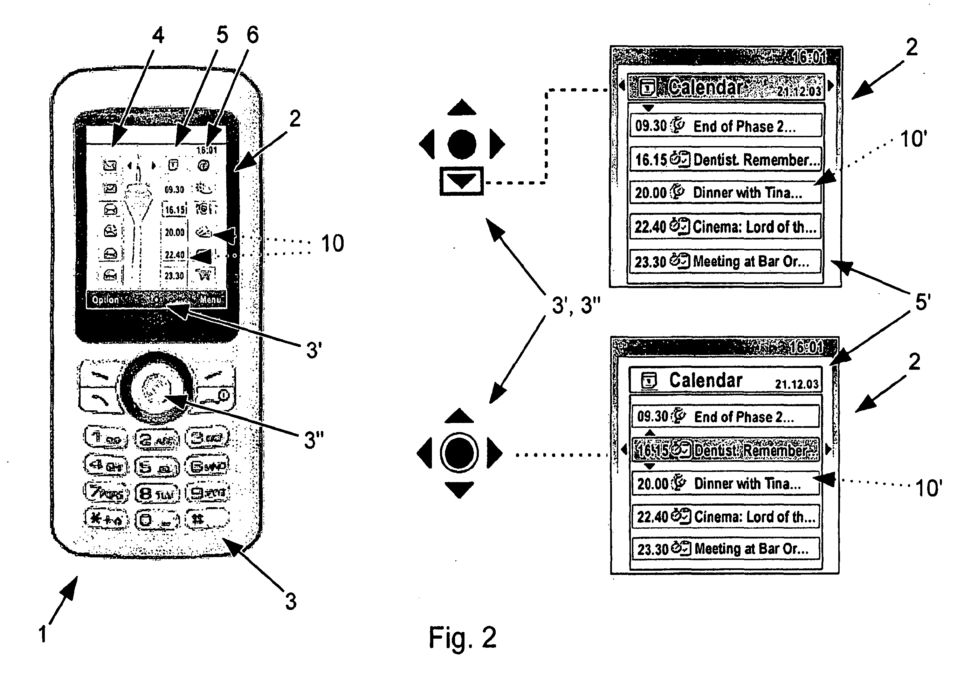

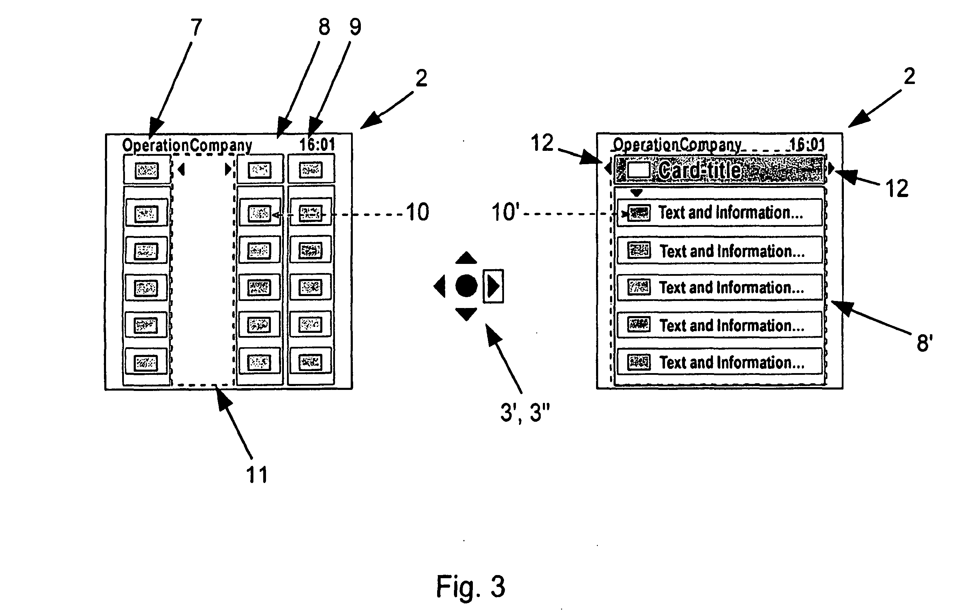

Wie anhand der in Fig. 1 und Fig. 2 dargestellten Ausführungsbeispiele erkennbar, sind seitens des einen Funkturm als Hintergrundbild darstellenden Displays 2 des Mobilfunktelefons 1 auswählbare Menüfelder 10 von Anwendungsprogrammen 4, 5 und 6 vertikal nebeneinander, also untereinander von oben nach unten, wiedergegeben. Die Auswahl einzelner Anwendungsprogramme 4, 5 oder 6 und deren Menüfelder 10 erfolgt mittels des die fünf Tasten, Pfeil nach oben, Pfeil nach rechts, Pfeil nach unten, Pfeil nach links und der mittig zwischen diesen angeordneten Auswahltaste aufweisenden Cursors 3" der Eingabeeinrichtung 3 des Mobilfunktelefons. Dabei ermöglicht der Cursor 3" sowohl eine Navigation durch als auch eine Auswahl der Menüfelder der Anwendungsprogramme. Die in Abhängigkeit des jeweiligen Anwendungsprogramms jeweils möglichen Navigations- und/oder Auswahlmöglichkeiten werden seitens des Displays 2 in einem unteren Bereich durch eine Abbildung 3' des Cursors 3" angezeigt. Dabei zeigt die Abbildung 3' des Cursors 3" nur die Tasten des Cursors 3" an, die für eine weitere Navigations- und/oder Auswahlmöglichkeit zur Verfügung stehen.

Bei dem Ausführungsbeispiel gemäß Fig. 1 ist zunächst - wie in Fig. 1 rechts oben dargestellt - durch Betätigung der Pfeil nach links Taste des Cursors 3" das Anwendungsprogramm 4, welches zur Erstellung, Verarbeitung und/oder Verwaltung von nutzerindividuellen Nachrichten, vorzugsweise umfassend Nachrichten von ein- und/oder ausgehenden Anrufen, Kurzmitteilungsdiensten (SMS) und/oder Multimedia-Mitteilungsdiensten (MMS) dient, ausgewählt. Durch diese Auswahl werden vorliegend seitens des Displays 2 die Menüfelder 10' der Funktionalitäten des Anwendungsprogramms 4 auf dem gesamten Display 2 vertikal nebeneinander, also untereinander von oben nach unten, wiedergegeben. In Fig. 1 ist das Anwendungsprogramm 4 in diesem Zustand dann entsprechend mit dem Bezugszeichen 4' gekennzeichnet. Anschließend ist - wie in Fig. 1 rechts unten dargestellt - durch Betätigung der Pfeil nach unten Taste des Cursors 3" das von oben zweite Menüfeld 10' zur Auswahl angewählt. Die hier nicht dargestellte Auswahl dieses Menüfeldes würde durch Betätigung der mittig zwischen den Pfeiltasten angeordneten Auswahltaste des Cursors 3" erfolgen. Die mit dieser Aktivierungsauswahl verbundene Funktionalität, vorliegend die Wiedergabe von Informationsinhalten einer Nachricht, würde dann seitens des Displays 2 wiedergegeben werden. Während die Menüfelder 10 vorliegend ausschließlich als graphische Symbole oder sogenannte Icons dargestellt sind, sind die Menüfelder 10' vorliegend als kombinierte graphische Symbole mit einen Teil eines Informationsinhaltes wiedergebenden Text ausgebildet.

Bei dem Ausführungsbeispiel gemäß Fig. 2 ist zunächst - wie in Fig. 2 rechts oben dargestellt - durch zweimalige Betätigung der Pfeil nach unten Taste des Cursors 3" das von oben dritte Menüfeld 10' das Anwendungsprogramms 5, welches zur Erstellung, Verarbeitung und/oder Verwaltung von nutzerindividuellen Terminen dient, ausgewählt. Wie bei dem Ausführungsbeispiel nach Fig. 1 werden vorliegend die Menüfelder 10' der Funktionalitäten des Anwendungsprogramms 5 auf dem gesamten Display 2 vertikal nebeneinander, also untereinander von oben nach unten, wiedergegeben. In Fig. 2 ist das Anwendungsprogramm 5 in diesem Zustand dann entsprechend mit dem Bezugszeichen 5' gekennzeichnet. Anschließend ist - wie in Fig. 2 rechts unten dargestellt - durch Betätigung der mittig zwischen den Pfeiltasten angeordneten Auswahltaste des Cursors 3" erfolgt dann die Aktivierungsauswahl, deren Ergebnis, vorliegend die Anzeige eines Termins seitens des Displays 2 hier nicht weiter dargestellt ist. Wie bei dem Ausführungsbeispiel gemäß Fig. 1 werden bei dem Ausführungsbeispiel gemäß Fig. 2 Menüfelder 10 vorliegend ausschließlich als graphische Symbole oder sogenannte Icons dargestellt während die Menüfelder 10' vorliegend als kombinierte graphische Symbole mit einen Teil eines Informationsinhaltes wiedergebenden Text ausgebildet sind.

Fig. 3 zeigt in einer schematischen Darstellung ein prinzipielles Ausführungsbeispiel für eine Wiedergabe von durch Aktivierungsauswahl mittels des Cursors 3" auswählbaren Menüfeldern 10 von Anwendungsprogrammen 7, 8 und 9 bzw. von Menüfeldern 10' von Funktionalitäten von Anwendungsprogrammen, vorliegend dem Anwendungsprogramm 8, welches im ausgewählten Zustand dann entsprechend mit dem Bezugszeichen 8' gekennzeichnet ist. Wie bei den Ausführungsbeispielen gemäß Fig. 1 und Fig. 2 werden die Menüfelder 10 von Anwendungsprogrammen 7, 8 und 9 als auch die Menüfelder 10' von Funktionalitäten der Anwendungsprogramme 7, 8, 9 - vorliegend anhand des mit dem Bezugszeichen 8' gekennzeichneten ausgewählten Anwendungsprogramms 8 dargestellt - vertikal nebeneinander, also untereinander von oben nach unten, wiedergegeben. Wie bei den Ausführungsbeispielen gemäß Fig. 1 und Fig. 2 werden Menüfelder 10 ausschließlich als graphische Symbole oder sogenannte Icons dargestellt während die Menüfelder 10' als kombinierte graphische Symbole mit einen Teil eines Informationsinhaltes wiedergebenden Text ausgebildet sind.

In Fig. 3 ist in dem links dargestellten Display 2 eines Mobilfunktelefons mit dem gestrichelt ausgebildeten Rahmen 11 seitens des Displays 2 dargestellt, dass in diesem Zustand noch kein Anwendungsprogramm 7, 8 oder 9 ausgewählt ist. Durch Betätigung der Pfeil nach rechts Taste des Cursors 3" wird dann das Anwendungsprogramm 8 ausgewählt. Dieser Zustand 8' ist in Fig. 3 rechts dargestellt. Dabei werden dann seitens des Displays 2 die Menüfelder 10' der Funktionalitäten des Anwendungsprogramms 8 auf dem gesamten Display 2 untereinander von oben nach unten wiedergegeben. Von diesem Zustand 8' des Anwendungsprogramms 8 kann vorliegend durch einmalige Betätigung der Pfeil nach rechts Taste des Cursors 3" zu dem hier nicht dargestellten entsprechenden Zustand 9' des Anwendungsprogramms 9 oder beispielsweise durch zweimalige Betätigung der Pfeil nach links Taste des Cursors 3" zu dem hier nicht dargestellten entsprechenden Zustand 7' des Anwendungsprogramms 7 gewechselt werden. Entsprechende Eingabemöglichkeiten für ein Wechseln durch Betätigung der entsprechenden Tasten des Cursors 3" sind seitens des Displays 2 durch die mit dem Bezugszeichen 12 gekennzeichneten Pfeile dargestellt.

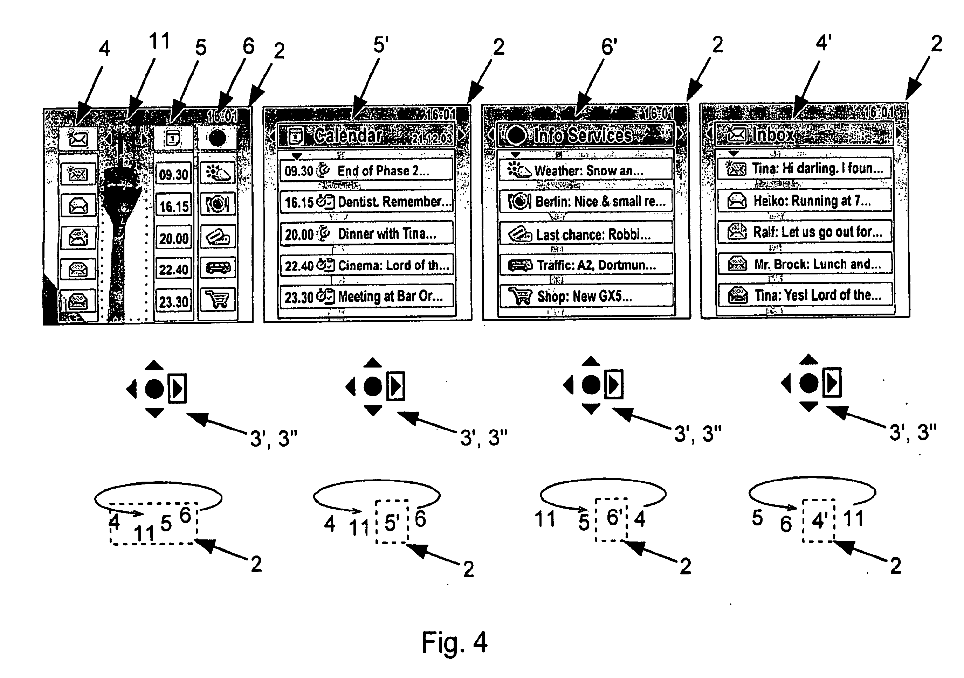

Fig. 4 zeigt ein Beispiel für einen entsprechenden Wechsel zwischen den Anwendungsprogrammen 4, 5 und 6 und dem Zustand 11 unausgewählter Anwendungsprogramme. Dabei ist durch entsprechende Betätigung der Pfeil nach rechts Taste des Cursors 3" ein Rotationswechseln zwischen den Anwendungsprogrammen 4, 5 und 6 und dem Zustand 11 unausgewählter Anwendungsprogramme vollziehbar.

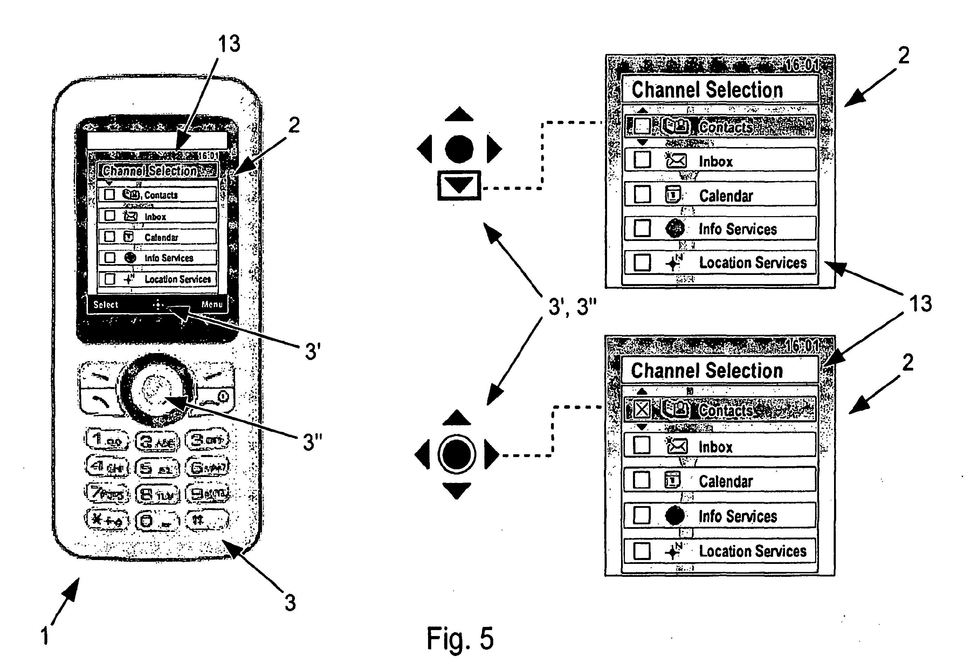

Bei dem Ausführungsbeispiel gemäß Fig. 5 ist die von dem Nutzer des Mobilfunktelefons 1 vornehmbare Auswahl ihn interessierender Anwendungsprogramme dargestellt. Die individuell auswählbaren Anwendungsprogramme werden dabei in dem mit dem Bezugszeichen 13 gekennzeichneten, als Auswahlfenster ausgebildeten Anzeigebereich seitens des Displays 2 des Mobilfunktelefons 1 wiedergegeben. Wie in Fig. 5 rechts oben dargestellt wird durch Betätigung der Pfeil nach unten Taste des Cursors 3" das Anwendungsprogramm "Contacts" angewählt und durch Betätigung der mittig zwischen den Pfeiltasten angeordneten Auswahltaste des Cursors 3" dann aktiviert, wie in Fig. 5 rechts unten dargestellt und anhand des anhand des Auswahlkreuzes bei dem Anwendungsprogramm "Contacts" ersichtlich.

Die in den Figuren dargestellten Ausführungsbeispiele dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display (mobiles Endgerät (1))
- 3, 3": Eingabeeinrichtung/Tastatur (mobiles Endgerät (1))
- 3': Anzeige Eingabemöglichkeiten Eingabeeinrichtung (3")
- 4, 4': Anzeigebereich Menüfelder Anwendungsprogramm 1
- 5, 5': Anzeigebereich Menüfelder Anwendungsprogramm 2
- 6, 6': Anzeigebereich Menüfelder Anwendungsprogramm 3
- 7: Anzeigebereich Menüfelder Anwendungsprogramm 1
- 8, 8': Anzeigebereich Menüfelder Anwendungsprogramm 2
- 9: Anzeigebereich Menüfelder Anwendungsprogramm 3
- 10: Menüfeld
- 11: Anzeigebereich Anzeigeeinrichtung (Hintergrundbild (Wallpaper))
- 12: Anzeige Auswahlmöglichkeiten
- 13: Anzeigebereich/Aktivierungsauswahl Anwendungsprogramme

## Patentansprüche

1. Verfahren zum Betreiben von in Mobilfunknetzen betreibbaren mobilen Endgeräten (1),
wobei
seitens einer optischen Anzeigeeinrichtung (2) eines mobilen Endgerätes (1) mittels einer Eingabeeinrichtung (3, 3") des mobilen Endgerätes (1) auswählbare Menüfelder (10, 10') zur Aktivierung von Anwendungsprogrammen (4, 5, 6, 7, 8, 9)
und/oder
auswählbare Menüfelder (10, 10') zur Aktivierung von Funktionalitäten (4', 5', 8') von Anwendungsprogrammen (4, 5, 6, 7, 8, 9)
wiedergegeben werden,
wobei
seitens der Anzeigeeinrichtung (2)
mehrere, mindestens zwei, Menüfelder (10) von wenigstens zwei Anwendungsprogrammen (4, 5, 6, 7, 8, 9)
zur Aktivierungsauswahl wiedergegeben werden
und
mehrere, mindestens zwei, Menüfelder (10') von Funktionalitäten (4', 5', 8') für mehrere der wenigstens zwei Anwendungsprogramme (4, 5, 6, 7, 8, 9) zur Aktivierungsauswahl wiedergegeben werden.

2. Verfahren nach Anspruch 1, **dadurch gekennzeichnet, dass** wenigstens eine Anwendungsprogramm **(4, 5, 6, 7, 8, 9)** und/oder wenigstens eine Funktionalität **(4', 5', 8')** eines Anwendungsprogramms **(4, 5, 6, 7, 8, 9)** wenigstens einen Nachrichtendienst eines Mobilfunknetzes nutzend ausgebildet ist.

3. Verfahren nach Anspruch 1 oder Anspruch 2, **gekennzeichnet durch** Anwendungsprogramme (4, 5, 6, 7, 8, 9) zur Wiedergabe und/oder Verarbeitung von Informationsinhalten, vorzugsweise von mittels eines Nachrichtendienstes eines Mobilfunknetzes auf mobile Endgeräte (1) übertragbaren Informationsinhalten.

4. Verfahren nach Anspruch 3, **dadurch gekennzeichnet, dass** seitens wenigstens eines Menüfeldes (10, 10') Informationsinhalte wenigstens teilweise wiedergegeben werden.

5. Verfahren nach Anspruch 4, **dadurch gekennzeichnet, dass** bei Aktivierungsauswahl eines Menüfeldes (10, 10') zumindest der verbleibende Teil der Informationsinhalte seitens der Anzeigeeinrichtung (2) wiedergegeben wird, vorzugsweise ohne die Wiedergabe der übrigen Menüfelder (10, 10') seitens der Anzeigeeinrichtung (2).

6. Verfahren nach einem der Ansprüche 1 bis 5, **dadurch gekennzeichnet, dass** die Menüfelder (10, 10') graphisch ausgebildet sind, vorzugsweise in Form von Bildern und/oder Symbolen.

7. Verfahren nach einem der Ansprüche 4 bis 6, **dadurch gekennzeichnet, dass** die Informationsinhalte durch graphisch animierte Menüfelder (10, 10') wiedergegeben werden.

8. Verfahren nach einem der Ansprüche 1 bis 7, **dadurch gekennzeichnet, dass** die Anwendungsprogramme (4, 5, 6, 7, 8, 9) und/oder die Funktionalitäten (4', 5', 8') der Anwendungsprogrammen (4, 5, 6, 7, 8, 9), deren Menüfelder (10, 10') seitens der Anzeigeeinrichtung (2) wiedergegeben werden, nutzerindividuell auswählbar sind.

9. Verfahren nach einem der Ansprüche 1 bis 8, **dadurch gekennzeichnet, dass** Art, Farbe, Größe und/oder Position der Menüfelder (10, 10'), die seitens der Anzeigeeinrichtung (2) wiedergegeben werden, nutzerindividuell auswählbar und/oder vorgebbar sind.

10. Verfahren nach einem der Ansprüche 1 bis 9, **dadurch gekennzeichnet, dass** die Menüfelder (10, 10') unter anwendungsorientierten Aspekten in Gruppen aufgeteilt und zu einer hierarchischen Menüstruktur gegliedert sind.

11. Verfahren nach einem der Ansprüche 1 bis 10, **dadurch gekennzeichnet, dass** die Menüfelder (10, 10') horizontal und/oder vertikal nebeneinander wiedergegeben werden.

12. Verfahren nach einem der Ansprüche 1 bis 11, **dadurch gekennzeichnet, dass** wenigstens ein Menüfeld (10, 10') eine Verknüpfung zu einer Nachrichtenquelle zur Auswahl wiedergibt und bei Aktivierungsauswahl eine entsprechende Verknüpfung erfolgt.

13. Verfahren nach einem der Ansprüche 2 bis 12, **dadurch gekennzeichnet, dass** der Nachrichtendienst des Mobilfunknetzes ein Rundspruchdienst, vorzugsweise ein nach Funkzellen individualisierbarer alphanumerischer Rundspruchdienst ist.

14. Verfahren nach einem der Ansprüche 2 bis 13, **dadurch gekennzeichnet, dass** der Nachrichtendienst des Mobilfunknetzes ein Kurzmitteilungsdienst SMS ist.

15. Verfahren nach einem der Ansprüche 2 bis 13, **dadurch gekennzeichnet, dass** der Nachrichtendienst des Mobilfunknetzes ein Multimedia-Mitteilungsdienst MMS ist.

16. Verfahren nach einem der Ansprüche 1 bis 15, **gekennzeichnet durch** ein Anwendungsprogramm (4, 6) zur Erstellung, Verarbeitung und/oder Verwaltung von nutzerindividuellen Nachrichten, vorzugsweise umfassend Nachrichten von ein- und/oder ausgehenden Anrufen, Kurzmitteilungsdiensten SMS und/oder Multimedia-Mitteilungsdiensten MMS.

17. Verfahren nach einem der Ansprüche 1 bis 16, **gekennzeichnet durch** ein Anwendungsprogramm (5) zur Erstellung, Verarbeitung und/oder Verwaltung von nutzerindividuellen Terminen, wobei der Nutzer vorzugsweise wenigstens teilautomatisch an aktuell anstehende Termine erinnert wird und/oder vorzugsweise Terminänderungen und/oder -abhängigkeiten wenigstens teilautomatisch verarbeitet werden.

18. Verfahren nach einem der Ansprüche 1 bis 17, **gekennzeichnet durch** ein Anwendungsprogramm zur nutzerindividuellen Erstellung, Verarbeitung und/oder Verwaltung von Informationen über Kommunikationspartner.

19. Verfahren nach einem der Ansprüche 1 bis 18, **gekennzeichnet durch** ein Anwendungsprogramm zur nutzerindividuellen Erstellung, Verarbeitung und/oder Verwaltung von optischen und/oder akustischen Informationen, vorzugsweise Fotos und/oder Musik.

20. Verfahren nach einem der Ansprüche 1 bis 19, **gekennzeichnet durch** ein zur Unterhaltung des Nutzers dienendes Spiel als Anwendungsprogramm, vorzugsweise ein über das Mobilfunknetz mit anderen Nutzern gemeinsam spielbares Spiel.

21. Mobiles Endgerät (1) zur Nutzung in Mobilfunknetzen, **dadurch gekennzeichnet, dass** dieses zur Ausführung eines Verfahrens nach einem der Ansprüche 1 bis 20 ausgebildet ist.

22. Mobiles Endgerät (1) nach Anspruch 21, **dadurch gekennzeichnet, dass** dieses ein Mobilfunktelefon (1) ist, vorzugsweise ein Multimedia-Mitteilungsdienst-fähiges, MMS-fähiges Mobilfunktelefon (1) mit integrierter digitaler Kamera.

## Claims

1. A method for operating mobile terminals (1) which can be operated in mobile networks,
wherein
selectable menu fields (10, 10') for activating application programs (4, 5, 6, 7, 8, 9)
and/or
selectable menu fields (10, 10') for activating functionalities (4', 5', 8') of application programs (4, 5, 6, 7, 8, 9)
will be reproduced
on an optical display device (2) of a mobile terminal (1)
by means of an input device (3, 3") of the mobile terminal (1),
wherein
on the display device (2)
several, at least two menu fields (10) of at least two application programs (4, 5, 6, 7, 8, 9)
will be reproduced for the activation selection
and
several, at least two menu fields (10') of functionalities (4', 5', 8') for several of the at last two application programs (4, 5, 6, 7, 8, 9)
will be reproduced for the activation selection.

2. A method according to claim 1, **characterized in that** at least one application program (4, 5, 6, 7, 8, 9) and/or at least one functionality (4', 5', 8') of an application program (4, 5, 6, 7, 8, 9) is using at least one message service of a mobile network.

3. A method according to claim 1 or claim 2, **characterized by** application programs (4, 5, 6, 7, 8, 9) for reproducing and/or processing information contents, preferably information contents that can be transmitted to mobile terminals (1) by means of a message service of a mobile network.

4. A method according to claim 3, **characterized in that** information contents are at least partially reproduced by means of at least one menu field (10, 10').

5. A method according to claim 4, **characterized in that** upon activation selection of a menu field (10, 10') at least the remaining part of the information contents will be reproduced by the display device (2), preferably without reproducing the other menu fields (10, 10') by the display device (2).

6. A method according to one of the claims 1 through 5, **characterized in that** the menu fields (10, 10') are realized in a graphic form, preferably in the form of images and/or symbols.

7. A method according to one of the claims 4 through 6, **characterized in that** the information contents are reproduced by graphically animated menu fields (10, 10').

8. A method according to one of the claims 1 through 7, **characterized in that** the application programs (4, 5, 6, 7, 8, 9) and/or the functionalities (4', 5', 8') of the application programs, the menu fields (10, 10') of which are reproduced by the display device (2), can be individually selected by the user.

9. A method according to one of the claims 1 through 8, **characterized in that** type, colour, size and/or position of the menu fields (10, 10') which are reproduced by means of the display device (2) can be user individually selected and/or predetermined.

10. A method according to one of the claims 1 through 9, **characterized in that** the menu fields (10, 10') are divided into groups in view of application oriented aspects and are arranged in a hierarchic menu structure.

11. A method according to one of the claims 1 through 10, **characterized in that** the menu fields (10, 10') will be reproduced horizontally and/or vertically side by side.

12. A method according to one of the claims 1 through 11, **characterized in that** at least one menu field (10, 10') reproduces a linkage to a message source for selection and a corresponding linkage will be realized upon activation selection.

13. A method according to one of the claims 2 through 12, **characterized in that** the message service of the mobile network is a broadcast service, preferably an alphanumeric broadcast service that can be individualized according to radio cells.

14. A method according to one of the claims 2 through 13, **characterized in that** the message service of the mobile network is a short message service SMS.

15. A method according to one of the claims 2 through 13, **characterized in that** the message service of the mobile network is a multimedia message service MMS.

16. A method according to one of the claims 1 through 15, **characterized by** an application program (4, 6) for creating, processing and/or administrating user individual messages, preferably comprising messages of incoming and/or outgoing calls, short message services SMS and/or multimedia message services MMS.

17. A method according to one of the claims 1 through 16, **characterized by** an application program (5) for creating, processing and/or administrating user individual appointments, wherein the user is preferably at least partially automatically reminded of immediately upcoming dates and/or preferably changes in appointments and/or dependencies of appointments are at least partially automatically processed.

18. A method according to one of the claims 1 through 17, **characterized by** an application program for the user individual creation, processing and/or administration of information about communication partners.

19. A method according to one of the claims 1 through 18, **characterized by** an application program for the user individual creation, processing and/or administration of optical and/or acoustic information, preferably photos and/or music.

20. A method according to one of the claims 1 through 19, **characterized by** a game as application program serving for the user's entertainment, preferably a game that can be played together with other users via the mobile network.

21. A mobile terminal (1) for the use in mobile networks, **characterized in that** this one is adapted for carrying out a method according to one of the claims 1 through 20.

22. A mobile terminal (1) according to claim 21, **characterized in that** this one is a mobile phone (1), preferably a mobile phone (1) that is capable of a multimedia message service MMS and comprises an integrated digital camera.

## Revendications

1. Procédé d'actionnement des terminaux mobiles actionnables dans des réseaux mobiles,
dans lequel
des champs de menus sélectionnables (10, 10') pour activer des programmes d'application (4, 5, 6, 7, 8, 9)
et/ou
des champs de menus sélectionnables (10, 10') pour activer des fonctionnalités (4', 5', 8') des programmes d'application
sont reproduits
par un dispositif d'affichage optique (2) d'un terminal mobile (1) par moyen d'un dispositif d'entrée (3, 3") du terminal mobile (1),
dans lequel
par le dispositif d'affichage optique (2)
plusieurs, au moins deux champs de menus (10) d'au moins deux programmes d'application (4, 5, 6, 7, 8, 9) étant reproduits
pour la sélection d'activation
et
plusieurs, au moins deux champs de menus (10') des fonctionnalités (4', 5', 8') pour plusieurs des au moins deux programmes d'application (4, 5, 6, 7, 8, 9) sont reproduits pour la sélection d'activation.

2. Procédé selon la revendication 1, **caractérisé en ce qu'**au moins un programme d'application (4, 5, 6, 7, 8, 9) et/ou au moins une fonctionnalité (4', 5', 8') d'un programme d'application (4, 5, 6, 7, 8, 9) utilise au moins un service de messages d'un réseau mobile.

3. Procédé selon la revendication 1 ou la revendication 2, **caractérisé par** des programmes d'application (4, 5, 6, 7, 8, 9) pour la reproduction et/ou le traitement des contenus d'informations, de préférence des contenus d'informations qu'on peut transmettre aux terminaux mobiles (1) par moyen d'un service de messages d'un réseau mobile.

4. Procédé selon la revendication 3, **caractérisé en ce qu'**au moins un champ de menu (10, 10') reproduit au moins partiellement des contenus d'informations.

5. Procédé selon la revendication 4, **caractérisé en ce que** si on sélectionne l'activation d'un champ de menu (10, 10'), au moins la part restante des contenus d'informations sera reproduite par le dispositif d'affichage (2), de préférence sans reproduction des autres champs de menus (10, 10') par le dispositif d'affichage (2).

6. Procédé selon l'une des revendications 1 à 5, **caractérisé en ce que** les champs de menus (10, 10') sont réalisés sous forme graphique, de préférence sous forme d'images et/ou de symboles.

7. Procédé selon l'une des revendications 4 à 6, **caractérisé en ce que** les contenus d'informations sont reproduits (10, 10') par des champs de menus graphiquement animés.

8. Procédé selon l'une des revendications 1 à 7, **caractérisé en ce qu'**on peut individuellement sélectionner selon les besoins d'usager les programmes d'application (4, 5, 6, 7, 8, 9) et/ou les fonctionnalités (4', 5', 8') des programmes d'application (4, 5, 6, 7, 8, 9), dont les champs de menus (10, 10') sont reproduits par le dispositif d'affichage (2).

9. Procédé selon l'une des revendications 1 à 8, **caractérisé en ce que** la nature, la couleur, l'étendue et/ou la position des champs de menus (10, 10') qui sont reproduits par le dispositif d'affichage (2) peuvent être sélectionnées et/ou prédéterminées individuellement selon les besoins d'usager.

10. Procédé selon l'une des revendications 1 à 9, **caractérisé en ce que** les champs de menus (10, 10') sont divisés en groupes en vue des aspects s'orientant aux applications et sont arrangés selon une structure de menus hiérarchique.

11. Procédé selon l'une des revendications 1 à 10, **caractérisé en ce que** les champs de menus (10, 10') sont reproduits horizontalement ou verticalement l'un à côté de l'autre.

12. Procédé selon l'une des revendications 1 à 11, **caractérisé en ce qu'**au moins un champ de menu (10, 10') reproduit un lien à une source de messages à sélectionner et si on sélectionne l'activation, le lien correspond sera réalisé.

13. Procédé selon l'une des revendications 2 à 12, **caractérisé en ce que** le service de messages du réseau mobile est un service de radiodiffusion, de préférence un service de radiodiffusion alphanumérique qu'on peut individualiser selon les cellules de radio.

14. Procédé selon l'une des revendications 2 à 13, **caractérisé en ce que** le service de messages du réseau mobile est un service de messages courts SMS.

15. Procédé selon l'une des revendications 2 à 13, **caractérisé en ce que** le service de messages du réseau mobile est un service de messages multimédia MMS.

16. Procédé selon l'une des revendications 1 à 15, **caractérisé par** un programme d'application (4, 6) pour créer, traiter et/ou administrer des messages individuels de l'usager, de préférence comprenant des messages des appels entrant et/ou sortant, des services de messages courts SMS et/ou des services de messages multimédia MMS.

17. Procédé selon l'une des revendications 1 à 16, **caractérisé par** un programme d'application (5) pour créer, traiter et/ou administrer des dates individuelles de l'usager, des dates actuellement à venir étant de préférence rappelé à l'usager au moins partiellement de manière automatique et/ou des modifications et/ou des dépendances de dates étant de préférence traitées au moins partiellement de manière automatique.

18. Procédé selon l'une des revendications 1 à 17, **caractérisé par** un programme d'application pour créer, traiter et/ou administrer individuellement selon les besoins d'usager des informations concernant les partenaires de communication.

19. Procédé selon l'une des revendications 1 à 18, **caractérisé par** un programme d'application pour créer, traiter et/ou administrer individuellement selon les besoins d'usager des informations optiques et/ou acoustiques, de préférence des photos et/ou de la musique.

20. Procédé selon l'une des revendications 1 à 19, **caractérisé par** un jeu en tant que programme d'application servant de divertissement de l'usager, de préférence un jeu qu'on peut jouer ensemble avec d'autres usagers via le réseau mobile.

21. Terminal mobile (1) pour l'utilisation dans des réseaux mobiles, **caractérisé en ce que** celui-ci est configuré pour l'exécution d'un procédé selon l'une des revendications 1 à 20.

22. Terminal mobile (1) selon la revendication 21, **caractérisé en ce que** celui-ci est un téléphone mobile (1), de préférence un téléphone mobile (1) capable d'un service de messages multimédia MMS et comprenant une caméra digitale intégrée.
